(19) **Europäisches Patentamt / European Patent Office / Office européen des brevets**

(11) **EP 4 024 964 B1**

(12) **EUROPEAN PATENT SPECIFICATION**

(45) Date of publication and mention
of the grant of the patent:
**25.06.2025 Bulletin 2025/26**

(21) Application number: **20869143.6**

(22) Date of filing: **08.09.2020**

(51) International Patent Classification (IPC):
**G09G 5/14** *(2006.01)*  **G09G 3/32** *(2016.01)*
**G06F 1/32** *(2019.01)*  **H04W 52/02** *(2009.01)*
**G06F 30/27** *(2020.01)*  **G09G 5/38** *(2006.01)*
**G06F 1/3218** *(2019.01)*  **G06F 1/3234** *(2019.01)*

(52) Cooperative Patent Classification (CPC):
**G09G 5/38; G06F 1/3218; G06F 1/3265;**
**G09G 3/32; G09G 5/14;** G09G 2310/04;
G09G 2320/048; G09G 2330/02; G09G 2330/023;
G09G 2340/04; G09G 2340/0414;
G09G 2340/0421; G09G 2340/0464;
G09G 2340/0471; G09G 2340/0478;          (Cont.)

(86) International application number:
**PCT/CN2020/114091**

(87) International publication number:
**WO 2021/057472 (01.04.2021 Gazette 2021/13)**

(54) **DISPLAY CONTROL METHOD AND ELECTRONIC DEVICE**

ANZEIGESTEUERUNGSVERFAHREN UND ELEKTRONISCHE VORRICHTUNG

PROCÉDÉ DE COMMANDE D'AFFICHAGE ET DISPOSITIF ÉLECTRONIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.09.2019 CN 201910900417**

(43) Date of publication of application:
**06.07.2022 Bulletin 2022/27**

(73) Proprietor: **Huawei Technologies Co., Ltd.**
**Longgang District**
**Shenzhen,**
**Guangdong 518129 (CN)**

(72) Inventors:
• **PAN, Shaowu**
**Shenzhen, Guangdong 518129 (CN)**

• **XU, Xiang**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
**CN-A- 101 465 107     CN-A- 102 789 303**
**CN-A- 105 117 156     CN-A- 105 278 811**
**CN-A- 106 254 647     CN-A- 106 254 647**
**CN-A- 109 283 996     CN-A- 109 410 814**
**JP-A- 2001 142 409     US-A1- 2014 189 583**
**US-A1- 2016 379 550     US-B2- 8 159 450**

EP 4 024 964 B1

**(Cont. next page)**

(52) Cooperative Patent Classification (CPC): (Cont.)
H04W 52/027

## Description

### TECHNICAL FIELD

This application relates to the field of artificial intelligence terminal technologies, and in particular, to a display control method and an electronic device.

### BACKGROUND

With popularization of use of mobile devices such as mobile phones, people have an increasingly strong demand for large-screen mobile phones. However, it is not very portable to use the large-screen mobile phone. To improve portability, a foldable-screen mobile phone having a stretchable and deformable screen becomes a development trend of the mobile phone.

For the foldable-screen mobile phone, the screen in an unfolded form is a large screen. Although the large screen provides a user with convenient functions such as mobile office, audio and video playing, and reading and browsing, the large screen also brings problems of battery endurance and a screen life. A severe problem of the screen life is damage to a display caused by performance deterioration. Therefore, how to ensure the screen life and the battery endurance when the large screen is provided for the user for enjoyment is a to-be-considered problem.

Further, CN 109 410 814 A refers to a method including the following steps: determining the dimension data of a minimum rectangle frame needed for comprising content to be displayed according to a shown control and displaying data in the minimum rectangle frame.

Further, US 2016/379550 Al refers to techniques for implementing aging compensation for a display. An example of an electronic device includes a display comprising pixels, each pixel comprising one or more Light Emitting Diodes (LEDs). The electronic device also includes a display aging compensation unit to receive input frame data corresponding to content to be displayed, adjust the input frame data to generate output frame data based on a degree of aging of the LEDs, and send the output frame data to the display. The electronic device also includes a display aging monitoring and compensation processing unit to accumulate aging data that describes the degree of aging of the LEDs. The aging data is to be accumulated by sampling the output frame data at a sampling rate that varies depending on a type of the content to be displayed.

### SUMMARY

This application is to provide a display control method and an electronic device. According to the method, power consumption of a display of the electronic device can be reduced, a battery endurance capability can be improved, and damage to the display caused by performance deterioration can further be alleviated. This problem is solved by the subject matter of the independent claims. Further implementation forms are provided in the dependent claims.

The objective and another objective are achieved by using features in the independent claims. Further implementations are embodied in the dependent claims, the specification, and the accompanying drawings.

According to a first aspect, an embodiment of this application provides a display control method. The method is applicable to an electronic device, and the electronic device may be a foldable-screen electronic device, a curved-screen electronic device, a full-screen electronic device, or the like. The method includes: displaying a first interface on a display; dividing the display into K candidate display regions; determining an optimal display region with a lowest accumulated dissipation value in the K candidate display regions, where the accumulated dissipation value is a dissipation value of each candidate display region accumulated from a first-time lighting-up moment; and adaptively displaying the first interface in the optimal display region.

It should be noted that parameters such as display duration and display luminance of different regions on the display are different. As a result, the different regions are damaged to different degrees due to performance deterioration. In other words, the damage degrees on the display are unbalanced. Consequently, some regions are likely to be severely damaged, and have defect pixels. In the technical solution provided in this embodiment of this application, the electronic device selects
the optimal display region with the lowest accumulated dissipation value on the display to display the first interface. This can alleviate damage to the display caused by performance deterioration. In addition, because the optimal display region is a partial region on the display, power consumption of the display of the electronic device can be reduced, and a battery endurance capability can be improved.

In a possible design, the dividing the display into K candidate display regions includes: dividing the display into a plurality of sub-blocks, where a resolution of each sub-block is a first preset resolution, and the first preset resolution is less than a second resolution of the display; and dividing the display into the K candidate display regions based on a second preset resolution, where each candidate display region includes M sub-blocks, M is an integer greater than or equal to 1, and K is an integer greater than 1.

It should be understood that division into the sub-blocks helps calculate the accumulated dissipation value of each candidate display region. For example, the accumulated dissipation value of each candidate display region is a sum of accumulated dissipation values of all the sub-blocks in the candidate display region. Therefore, in the technical solution provided in this embodiment of this application, the electronic device selects the optimal display region (including one or more sub-blocks) with the lowest accumulated dissipation value on the display to display the first interface. This can alleviate the damage to the display caused by the performance deterioration. In addition, because the optimal display region is a partial region on the display, the power consumption of the display of the electronic device can be reduced, and the battery endurance capability can be improved.

In a possible design, the determining an optimal display region with a lowest accumulated dissipation value in the K candidate display regions includes: determining an accumulated dissipation value of each sub-block in each candidate display region in the K candidate display regions, where j is an integer greater than or equal to 1 and less than or equal to K; determining the sum of the accumulated dissipation values of all the sub-blocks in each candidate display region as an accumulated dissipation value of a $j^{th}$ candidate display region; and determining the optimal display region with the lowest accumulated dissipation value in the K candidate display regions.

It should be noted that the division into the sub-blocks helps calculate the accumulated dissipation value of each candidate display region. For example, the accumulated dissipation value of each candidate display region is the sum of the accumulated dissipation values of all the sub-blocks in the candidate display region. Therefore, in the technical solution provided in this embodiment of this application, the electronic device selects the optimal display region (including one or more sub-blocks) with the lowest accumulated dissipation value on the display to display the first interface. This can alleviate the damage to the display caused by the performance deterioration. In addition, because the optimal display region is a partial region on the display, the power consumption of the display of the electronic device can be reduced, and the battery endurance capability can be improved.

In a possible design, the determining an accumulated dissipation value of each sub-block in each candidate display region in the K candidate display regions includes: determining an accumulated dissipation value of an $i^{th}$ sub-block in each candidate display region by using the following formulas:

$$\Delta d_i = \frac{c_i \cdot \Delta t_i}{\alpha};$$

and

$$d_i = d_{0i} + \Delta d_i.$$

$\Delta t_i$ is a display duration of the $i^{th}$ sub-block. $\Delta d_i$ is a dissipation value of the $i^{th}$ sub-block within the duration $\Delta t_i$, and $c_i$ is an average display luminance of the $i^{th}$ sub-block within the duration $\Delta t_i$. $\alpha$ is a product of a half-luminance life and initial luminance of the display, and the initial luminance value may be a luminance value when the display is lit up for the first time after delivery. The half-luminance life is a working duration required when the display attenuates from the initial luminance to half of the initial luminance. $d_{0i}$ is an accumulated dissipation value of the $i^{th}$ sub-block before $\Delta t_i$. $d_i$ is an accumulated dissipation value after the $i^{th}$ sub-block is lit up for the first time, and i is an integer greater than or equal to and less than or equal to M.

It should be noted that the division into the sub-blocks helps calculate the accumulated dissipation value of each candidate display region. For example, the accumulated dissipation value of each candidate display region is the sum of the accumulated dissipation values of all the sub-blocks in the candidate display region, and the accumulated dissipation value of each sub-block may be calculated by using the foregoing formulas. Therefore, in the technical solution provided in this embodiment of this application, the electronic device selects the optimal display region (including one or more sub-blocks) with the lowest accumulated dissipation value of the display to display the first interface. This can alleviate the damage to the display caused by the performance deterioration. In addition, because the optimal display region is a partial region on the display, the power consumption of the display of the electronic device can be reduced, and the battery endurance capability can be improved.

In a possible design, the determining an accumulated dissipation value of each sub-block in each candidate display region in the K candidate display regions includes: determining an accumulated dissipation value of an $i^{th}$ sub-block in each candidate display region by using the following formulas:

$$\Delta d_i = \Delta d_{r,i} + \Delta d_{g,i} + \Delta d_{b,i};$$

$$\Delta d_{r,i} = \frac{c_{r,i} \cdot \Delta t_{r,i}}{\alpha_r};$$

$$\Delta d_{g,i} = \frac{c_{g,i} \cdot \Delta t_{g,i}}{\alpha_g};$$

$$\Delta d_{b,i} = \frac{c_{b,i} \cdot \Delta t_{b,i}}{\alpha_b};$$

and

$$d_i = d_{0i} + \Delta d_i.$$

$\Delta t_{r,i}$ is a display duration of a red pixel unit on the ith sub-block. $\Delta d_{r,i}$ is a dissipation value of the red pixel unit on the ith sub-block within the duration $\Delta t_{r,i}$, and $c_{r,i}$ is an average display luminance of the red pixel unit on the ith sub-block within the duration $\Delta t_{r,i}$. $\alpha_r$ is a product of a half-luminance life and an initial luminance of a red pixel unit on the display, and the initial luminance value may be a luminance value of the red pixel unit when the display is lit up for the first time after delivery. The half-luminance life is a working duration required when the red pixel unit on the display attenuates from the initial luminance to half of the initial luminance.

$\Delta t_{g,i}$ is a display duration of a green pixel unit on the ith sub-block. $\Delta d_{g,i}$ is a dissipation value of the green pixel unit on the ith sub-block within the duration $\Delta t_{g,i}$, and $c_{g,i}$ is an average display luminance of the green pixel unit on the ith sub-block within the duration $\Delta t_{g,i}$. $\alpha_g$ is a product of a half-luminance life and an initial luminance of a green pixel unit on the display, and the initial luminance value may be a luminance value of the green pixel unit when the display is lit up for the first time after delivery. The half-luminance life is a working duration required when the green pixel unit on the display attenuates from the initial luminance to half of the initial luminance.

$\Delta t_{b,i}$ is display duration of a blue pixel unit on the ith sub-block. $\Delta d_{b,i}$ is a dissipation value of the blue pixel unit on the ith sub-block within the duration $\Delta t_{b,i}$, and $c_{b,i}$ is an average display luminance of the blue pixel unit on the ith sub-block within the duration $\Delta t_{b,i}$. $\alpha_b$ is a product of a half-luminance life and an initial luminance of a blue pixel unit on the display, and the initial luminance value may be a luminance value of the blue pixel unit when the display is lit up for the first time after delivery. The half-luminance life is a working duration required when the blue pixel unit on the display attenuates from the initial luminance to half of the initial luminance.

$d_{0i}$ is an accumulated dissipation value of the ith sub-block before $\Delta t_i$. $d_i$ is an accumulated dissipation value after the ith sub-block is lit up for the first time, and i is an integer greater than or equal to and less than or equal to M.

It should be noted that the division into the sub-blocks helps calculate the accumulated dissipation value of each candidate display region. For example, the accumulated dissipation value of each candidate display region is the sum of the accumulated dissipation values of all the sub-blocks in the candidate display region, and the accumulated dissipation value of each sub-block may be a sum of accumulated dissipation values of different color pixel units on the sub-block. Therefore, in the technical solution provided in this embodiment of this application, the electronic device selects the optimal display region (including one or more sub-blocks) with the lowest accumulated dissipation value on the display to display the first interface. This can alleviate the damage to the display caused by the performance deterioration. In addition, because the optimal display region is a partial region on the display, the power consumption of the display of the electronic device can be reduced, and the battery endurance capability can be improved.

In a possible design, the electronic device further determines that an accumulated dissipation value of a sub-block with a largest accumulated dissipation value in the optimal display region is less than a preset threshold.

It should be noted that, after determining the optimal display region, the electronic device may determine that there is no severely damaged sub-block in the optimal display region. In this way, further deterioration of a sub-block that has been severely damaged can be prevented, to reduce a damage degree.

In a possible design, the determining an optimal display region with a lowest accumulated dissipation value in the K candidate display regions includes: determining the optimal display region by using the following formulas:

$$min\{\beta * D_j + (1 - \beta)d_{j,max}\},$$

where j=1, ..., and K;

$$D_j = \frac{1}{M_0 - N_0 + 1} \sum_{i=N_0}^{M_0} d_i ,$$

where i = $N_0$, ... , and $M_0$; *and*

$$d_{j,max} = max(d_i).$$

$D_j$ is an average accumulated dissipation value of the $j^{th}$ candidate display region. K is a total quantity of the candidate display regions. $d_i$ is an accumulated dissipation value of an $i^{th}$ sub-block included in the $j^{th}$ candidate display region. $d_{j,max}$ is an accumulated dissipation value of a sub-block with a highest accumulated dissipation value in the $j^{th}$ candidate display region, and $d_i$ is a dissipation value of the $i^{th}$ sub-block included in the $j^{th}$ candidate display region. β is a weighting coefficient. It may be understood that, after the display is divided into the plurality of sub-blocks, a number may be set for each sub-block, for example, i=1 for a first sub-block, i=2 for a second sub-block, i=$N_0$ for an $N_0^{th}$ sub-block, and i=$M_0$ for an $M_0^{th}$ sub-block.

It should be noted that, in the technical solution provided in this embodiment of this application, the electronic device selects the optimal display region (including one or more sub-blocks) with the lowest accumulated dissipation value on the display to display the first interface. This can alleviate the damage to the display caused by the performance deterioration. In addition, because the optimal display region is a partial region on the display, the power consumption of the display of the electronic device can be reduced, and the battery endurance capability can be improved. In addition, after determining the optimal display region, the electronic device may determine that there is no severely damaged sub-block in the optimal display region. In this way, further deterioration of the sub-block that has been severely damaged can be prevented, to reduce the damage degree.

In a possible design, the electronic device may further turn off another region other than the optimal display region on the display, or display a touch keyboard in another region other than the optimal display region on the display.

It should be noted that, in the technical solution provided in this embodiment of this application, the electronic device selects the optimal display region (including one or more sub-blocks) with the lowest accumulated dissipation value on the display to display the first interface. This can alleviate the damage to the display caused by the performance deterioration. In addition, because the optimal display region is a partial region on the display, and the another region is turned off, the power consumption of the display of the electronic device can be reduced, and the battery endurance capability can be improved.

In a possible design, the first interface includes an application window of a first application, and before the dividing the display into K candidate display regions, the electronic device may further determine a resolution or size of the candidate display region based on an application type of the first application and/or display content on the first interface.

It should be noted that, in the technical solution provided in this embodiment of this application, the electronic device may determine the size of the candidate display region based on a type or display content of an application on a current display interface, namely, the first interface. For example, if the current display interface displays a WeChat application, the electronic device determines that the candidate display region is displayed in a portrait orientation, or if the current display region displays a Tencent video, the electronic device determines that the candidate display region is displayed in a landscape orientation.

In a possible design, the adaptively displaying the first interface in the optimal display region includes: scaling down the first interface and displaying the scaled-down first interface in the optimal display region; or displaying a part of the content of the first interface in the optimal display region, and skipping displaying a remaining part of the content of the first interface.

It should be noted that, in the technical solution provided in this embodiment of this application, the electronic device selects the optimal display region (including one or more sub-blocks) with the lowest accumulated dissipation value on the display to display the first interface. For example, the first interface is scaled down and displayed in the optimal display region, or a part of the first interface is displayed in the optimal display region. In this way, the damage to the display caused by the performance deterioration can be alleviated. In addition, because the optimal display region is a partial region on the display, and the another region is turned off, the power consumption of the display of the electronic device can be reduced, and the battery endurance capability can be improved.

According to a second aspect, an embodiment of this application provides an electronic device. The electronic device is, for example, a foldable-screen electronic device. The electronic device includes: one or more processors; a memory; a plurality of applications; and one or more computer programs. The one or more computer programs are stored in the memory, and the one or more computer programs include instructions. When the instructions are executed by the electronic device, the electronic device is enabled to perform the following steps: displaying a first interface on a display; dividing the display into K candidate display regions; determining an optimal display region with a lowest accumulated dissipation value in the K candidate display regions, where the accumulated dissipation value is a dissipation value of each candidate display region accumulated from a first-time lighting-up moment; and adaptively displaying the first interface in the optimal display region.

In a possible design, when the instructions are executed by the electronic device, the electronic device is enabled to specifically perform the following steps: dividing the display into a plurality of sub-blocks, where a resolution of each sub-block is a first preset resolution, and the first preset resolution is less than a second resolution of the display; and dividing the display into the K candidate display regions based on a second preset resolution, where each candidate display region includes M sub-blocks, M is an integer greater than or equal to 1, and K is an integer greater than 1.

In a possible design, when the instructions are executed by the electronic device, the electronic device is enabled to specifically perform the following steps: determining an accumulated dissipation value of each sub-block in each candidate display region in the K candidate display regions, where j is an integer greater than or equal to 1 and less than or equal to K; determining a sum of the accumulated dissipation values of all the sub-blocks in each candidate display region as an accumulated dissipation value of a $j^{th}$ candidate display region; and determining the optimal display region with the lowest accumulated dissipation value in the K candidate display regions.

In a possible design, when the instructions are executed by the electronic device, the electronic device is enabled to specifically perform the following step: determining an accumulated dissipation value of an $i^{th}$ sub-block in each candidate display region by using the following formulas:

$$\Delta d_i = \frac{c_i \cdot \Delta t_i}{\alpha};$$

and

$$d_i = d_{0i} + \Delta d_i.$$

$\Delta t_i$ is a display duration of the $i^{th}$ sub-block. $\Delta d_i$ is a dissipation value of the $i^{th}$ sub-block within the duration $\Delta t_i$, and $c_i$ is an average display luminance of the $i^{th}$ sub-block within the duration $\Delta t_i$. $\alpha$ is a product of a half-luminance life and an initial luminance of the display, and the initial luminance value may be a luminance value when the display is lit up for the first time after delivery. The half-luminance life is a working duration required when the display attenuates from the initial luminance to half of the initial luminance. $d_{0i}$ is an accumulated dissipation value of the $i^{th}$ sub-block before $\Delta t_i$. $d_i$ is an accumulated dissipation value after the $i^{th}$ sub-block is lit up for the first time, and i is an integer greater than or equal to and less than or equal to M.

In a possible design, when the instructions are executed by the electronic device, the electronic device is enabled to specifically perform the following step: determining an accumulated dissipation value of an $i^{th}$ sub-block in each candidate display region by using the following formulas:

$$\Delta d_i = \Delta d_{r,i} + \Delta d_{g,i} + \Delta d_{b,i};$$

$$\Delta d_{r,i} = \frac{c_{r,i} \cdot \Delta t_{r,i}}{\alpha_r};$$

$$\Delta d_{g,i} = \frac{c_{g,i} \cdot \Delta t_{g,i}}{\alpha_g};$$

$$\Delta d_{b,i} = \frac{c_{b,i} \cdot \Delta t_{b,i}}{\alpha_b};$$

and

$$d_i = d_{0i} + \Delta d_i.$$

$\Delta t_{r,i}$ is a display duration of a red pixel unit on the $i^{th}$ sub-block. $\Delta d_{r,i}$ is a dissipation value of the red pixel unit on the $i^{th}$ sub-block within the duration $\Delta t_{r,i}$, and $c_{r,i}$ is an average display luminance of the red pixel unit on the $i^{th}$ sub-block within the duration $\Delta t_{r,i}$. $\alpha_r$ is a product of a half-luminance life and an initial luminance of a red pixel unit on the display, and the initial luminance value may be a luminance value of the red pixel unit when the display is lit up for the first time after delivery. The half-luminance life is a working duration required when the red pixel unit on the display attenuates from the initial luminance to half of the initial luminance.

$\Delta t_{g,i}$ is a display duration of a green pixel unit on the ith sub-block. $\Delta d_{g,i}$ is a dissipation value of the green pixel unit on the ith sub-block within the duration $\Delta t_{g,i}$, and $c_{g,i}$ is an average display luminance of the green pixel unit on the ith sub-block within the duration $\Delta t_{g,i}$. $\alpha_g$ is a product of a half-luminance life and an initial luminance of a green pixel unit on the display, and the initial luminance value may be a luminance value of the green pixel unit when the display is lit up for the first time after delivery. The half-luminance life is a working duration required when the green pixel unit on the display attenuates from the initial luminance to half of the initial luminance.

$\Delta t_{b,i}$ is a display duration of a blue pixel unit on the ith sub-block. $\Delta d_{b,i}$ is a dissipation value of the blue pixel unit on the ith sub-block within the duration $\Delta t_{b,i}$, and $c_{b,i}$ is an average display luminance of the blue pixel unit on the ith sub-block within the duration $\Delta t_{b,i}$. $\alpha_b$ is a product of a half-luminance life and initial luminance of a blue pixel unit on the display, and the initial luminance value may be a luminance value of the blue pixel unit when the display is lit up for the first time after delivery. The half-luminance life is a working duration required when the blue pixel unit on the display attenuates from the initial luminance to half of the initial luminance.

$d_{0i}$ is an accumulated dissipation value of the ith sub-block before $\Delta t_i$. $d_i$ is an accumulated dissipation value after the ith sub-block is lit up for the first time, and i is an integer greater than or equal to and less than or equal to M.

In a possible design, when the instructions are executed by the electronic device, the electronic device is enabled to further perform the following step: determining that an accumulated dissipation value of a sub-block with a largest accumulated dissipation value in the optimal display region is less than a preset threshold.

In a possible design not forming part of the claimed invention, when the instructions are executed by the electronic device, the electronic device is enabled to specifically perform the following step: determining the optimal display region by using the following formulas:

$$min\{\beta * D_j + (1 - \beta)d_{j,max}\},$$

where j=1, ..., and K;

$$D_j = \frac{1}{M_0 - N_0 + 1} \sum_{i=N_0}^{M_0} d_i \, ,$$

where i = N0, ..., and M0; and

$$d_{j,max} = max(d_i).$$

$D_j$ is an average accumulated dissipation value of the jth candidate display region. K is a total quantity of the candidate display regions. $d_i$ is an accumulated dissipation value of an ith sub-block included in the jth candidate display region. $d_{j,max}$ is an accumulated dissipation value of a sub-block with a highest accumulated dissipation value in the jth candidate display region, and $d_i$ is a dissipation value of the ith sub-block included in the jth candidate display region. $\beta$ is a weighting coefficient.

In a possible design, when the instructions are executed by the electronic device, the electronic device is enabled to further perform the following step: turning off another region other than the optimal display region on the display, or displaying a touch keyboard in another region other than the optimal display region on the display.

In a possible design, when the instructions are executed by the electronic device, the electronic device is enabled to further perform the following step: determining a resolution or size of the candidate display region based on an application type of a first application on the first interface and/or display content on the first interface.

In a possible design, when the instructions are executed by the electronic device, the electronic device is enabled to specifically perform the following step: scaling down the first interface and displaying the scaled-down first interface in the optimal display region; or displaying a part of the content on the first interface in the optimal display region, and skipping displaying a remaining part of the content on the first interface.

According to a third aspect, an embodiment of this application provides a chip. The chip is coupled to a memory in an electronic device, and is configured to invoke a computer program stored in the memory and execute the technical solution according to any one of the first aspect and the possible designs of the first aspect in embodiments of this application. In this embodiment of this application, "coupling" means that two components are directly or indirectly combined with each other. Specifically, the chip may indicate a display to display a first interface; divide the display into K candidate display regions; determine an optimal display region with a lowest accumulated dissipation value in the K candidate display regions, where the accumulated dissipation value is a dissipation value of each candidate display region accumulated from a first-time lighting-up moment; and adaptively display the first interface in the optimal display region.

According to a fourth aspect, an embodiment of this application further provides a circuit system. The circuit system may be one or more chips, for example, a system-on-a-chip (system-on-a-chip, SoC). The circuit system includes at least one processing circuit. The at least one processing circuit is configured to: indicate a display to display a first interface; divide the display into K candidate display regions; determine an optimal display region with a lowest accumulated dissipation value in the K candidate display regions, where the accumulated dissipation value is a dissipation value of each candidate display region accumulated from a first-time lighting-up moment; and adaptively display the first interface in the optimal display region.

According to a fifth aspect, an embodiment of this application further provides an electronic device. The electronic device includes modules/units that perform the method according to any one of the first aspect and the possible designs of the first aspect. These modules/units may be implemented by hardware, or may be implemented by hardware by executing corresponding software.

According to a sixth aspect, an embodiment of this application further provides a computer-readable storage medium. The computer-readable storage medium includes a computer program, and when the computer program is run on an electronic device, the electronic device is enabled to perform the technical solution according to any one of the first aspect and the possible designs of the first aspect of embodiments of this application.

According to a seventh aspect, a program product in an embodiment of this application includes instructions. When the program product runs on an electronic device, the electronic device is enabled to perform the technical solution according to any one of the first aspect and the possible designs of the first aspect of embodiments of this application.

## BRIEF DESCRIPTION OF DRAWINGS

FIG. 1 is a schematic diagram of a hardware structure of an electronic device according to an embodiment of this application;

FIG. 2 is a schematic diagram of a hardware structure of an electronic device according to an embodiment of this application;

FIG. 3 is a schematic diagram of a software structure of an electronic device according to an embodiment of this application;

FIG. 4 is a schematic flowchart of a display control method according to an embodiment of this application;

FIG. 5 is a schematic diagram of a candidate display region according to an embodiment of this application;

FIG. 6 is a schematic diagram of an optimal display region on an electronic device according to an embodiment of this application; and

FIG. 7 is a schematic diagram of an optimal display region on an electronic device according to an embodiment of this application.

## DESCRIPTION OF EMBODIMENTS

The following describes the technical solutions in embodiments of this application in detail with reference to accompanying drawings in the following embodiments of this application.

Terms used in the following embodiments are merely intended to describe specific embodiments, but are not intended to limit this application. Terms "a", "the", "the foregoing", and "this" of singular forms used in this specification of this application are also intended to include expressions such as "one or more", unless otherwise specified in the context clearly. It should further be understood that, in embodiments of this application, "one or more" means one, two, or more than two, and the term "and/or" describes an association between associated objects, and indicates that three relationships may exist. For example, A and/or B may indicate the following cases: Only A exists, both A and B exist, and only B exists, where A and B may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to the embodiment. Therefore, statements "in an embodiment", "in some embodiments", "in some other embodiments", "in other embodiments", and the like that appear at different places do not necessarily mean referring to a same embodiment, instead, the statements mean referring to "one or more but not all of the embodiments", unless otherwise specifically emphasized in other ways. Terms "include", "comprise", "have", and variants of the terms all mean "include but are not limited to", unless otherwise specifically emphasized in other ways.

The following first describes some terms in embodiments of this application to help persons skilled in the art have a better understanding.

In embodiments of this application, "at least one" means one or more, and "a plurality of" means two or more. In addition, it should be understood that, in descriptions of this application, words such as "first" and "second" are merely used for purposes of distinguishing descriptions, but should not be understood as indicating or implying relative importance, or should not be understood as indicating or implying a sequence

An application (application, app) in embodiments of this application may be referred to as an application for short, and is a software program that can implement one or more specific functions. Generally, a plurality of applications may be installed on an electronic device, for example, an instant messaging application, a video application, an audio application, and an image shooting application. The instant messaging application may include, for example, a messaging application, WeChat (WeChat), a WhatsApp Messenger, LINE (Line), Instagram (Instagram), Kakao Talk, and DingTalk. The image shooting application may include, for example, a camera application (a system camera or a third-party camera application). The video application may include, for example, YouTube, Twitter, TikTok, iQIYI, and Tencent Video. The audio application may include, for example, KuGou, EMUMO, and QQ Music. An application mentioned in the following embodiments may be an application installed before delivery of the electronic device, or may be an application downloaded from a network or obtained from another electronic device by a user in a process of using the electronic device.

Embodiments of this application provide a display control method. The method is applicable to any electronic device, for example, an electronic device having a curved screen, a full screen, or a foldable screen. The electronic device is, for example, a mobile phone, a tablet computer, a wearable device (for example, a watch, a band, or a smart helmet), a vehicle-mounted device, a smart home, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). In the following embodiments, a foldable mobile phone is used as an example for description. In the display control method provided in embodiments of this application, usage situations of different regions on a screen are considered. Some regions are used for a relatively large quantity of times/relatively long duration, and some regions are used for a relatively small quantity of times/relatively short duration. Alternatively, average display luminance of some regions is relatively high, and average display luminance of some regions is relatively low. For example, a screen attenuation degree of the region that is used for the relatively large quantity of times/relatively long duration or whose average display luminance is relatively high is relatively high, and a screen attenuation degree of the region that is used for the relatively small quantity of times/relatively short duration or whose average display luminance is relatively low is relatively low. Therefore, attenuation degrees of the different regions on a display of the electronic device are different. To avoid attenuation imbalance of the different regions on the display, in the display control method provided in this application, the electronic device may divide the screen into a plurality of candidate display regions; determine an optimal display region with a lowest attenuation degree in the plurality of candidate display regions; display information in the optimal display region; and turn off another display region. In this way, attenuation of the different regions on the display can be balanced. In addition, because a display area of the determined optimal display region is less than a display area of an entire display region of the display, battery power consumption is reduced to some extent, and a battery endurance capability is improved.

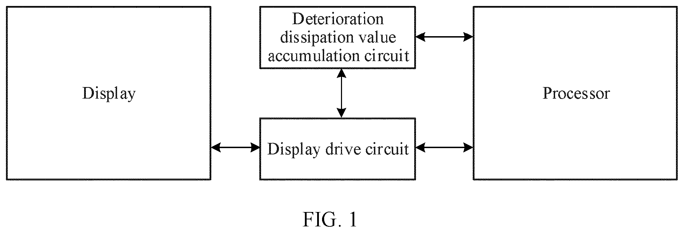

FIG. 1 is a schematic diagram of a hardware structure of an electronic device according to an embodiment of this application. The electronic device may be a mobile phone (a foldable-screen mobile phone or a non-foldable-screen mobile phone), a tablet computer (a foldable tablet computer or a non-foldable tablet computer), or the like. As shown in FIG. 1, the electronic device includes a display, a deterioration dissipation value accumulation circuit, a display drive circuit, and a processor.

The display is configured to display a user interface (user interface, UI). The display is an active-matrix organic light-emitting diode (active matrix OLED, AMOLED), or an organic light-emitting diode (organic light-emitting diode, OLED). This is not limited in this embodiment of this application.

The display drive circuit is configured to drive the display to display the user interface (user interface, UI). Specifically, the display drive circuit may send a display digital stream to the display. The display digital stream includes display information of each pixel unit (which may be referred to as a pixel unit for short below) on the display, and the display information may include display luminance, display time, text information, image information, and the like. Therefore, the display displays the corresponding display information on each pixel unit, so that the entire display presents the UI.

The deterioration dissipation accumulation circuit may be configured to: listen to the display digital stream sent by the display drive circuit to the display; determine average display luminance and display duration of each sub-block on the display based on the display digital stream; and then determine an accumulated dissipation value of each sub-block based on the average display luminance and the display duration of each sub-block. Specifically, a process of dividing the sub-blocks on the display and a process of determining the accumulated dissipation value of each sub-block are described below.

The processor may be configured to determine a plurality of candidate display regions on the display based on a preset resolution. Each candidate display region includes a plurality of sub-blocks. The processor may further determine a total dissipation value of all the sub-blocks in each candidate display region; then determine a candidate display region with a lowest total dissipation value as an optimal display region; display information in the optimal display region; and turn off another region. Specifically, a process of dividing the candidate display regions and a process of determining the optimal display region are described below.

Optionally, the deterioration dissipation accumulation circuit may be a chip, an integrated circuit, or the like, and the display drive circuit may be a chip, an integrated circuit, or the like. It may be understood that the deterioration dissipation accumulation circuit may be integrated into the processor, and the display drive circuit may also be integrated into the processor. In other words, the processor may implement functions of the deterioration dissipation accumulation circuit and the display drive circuit.

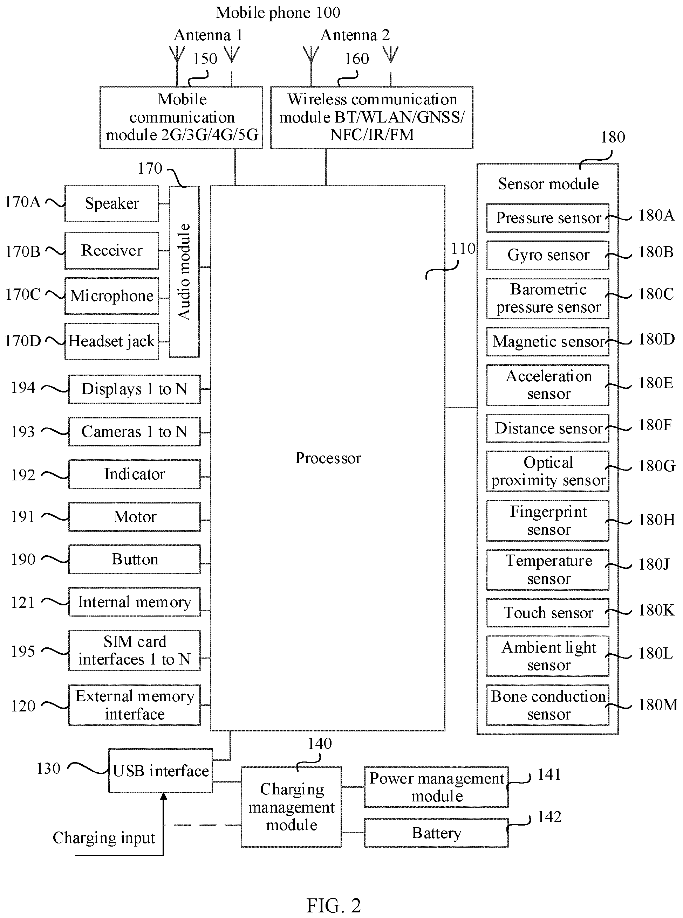

For example, FIG. 2 is a schematic diagram of a structure of the electronic device.

As shown in FIG. 2, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device. The controller may generate an operation control signal based on an instruction operation code and a time sequence signal, to complete control of instruction fetching and instruction execution. A memory may further be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

It should be noted that the deterioration dissipation value accumulation circuit and the display drive circuit shown in FIG. 1 may be integrated into the processor 110. In other words, the processor 110 executes the functions of the deterioration dissipation value accumulation circuit and the display drive circuit.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device, and may also be configured to transmit data between the electronic device and a peripheral device. The charging management module 140 is configured to receive a charging input from the charger. The power management module 141 is configured to connect the battery 142 and the charging management module 140 to the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the electronic device may be implemented through the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the electronic device may be configured to cover one or more communication frequency bands. Different antennas may further be multiplexed, to improve antenna utilization. For example, the antenna 1 may be multiplexed as a diversity antenna in a wireless local region network. In some other embodiments, the antenna may be used in combination with a tuning switch.

The mobile communication module 150 may provide a solution that is applied to the electronic device and that includes wireless communication such as 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same component.

The wireless communication module 160 may provide a solution that is applied to the electronic device and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 of the electronic device is coupled to the mobile communication module 150, and the antenna 2 is coupled to the wireless communication module 160, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application and the like. The display 194 includes a display panel. The display panel is , an organic light-emitting diode (organic light-emitting diode, OLED) or , an active-matrix organic light-emitting diode (active-matrix organic light-emitting diode, AMOLED). In some embodiments, the electronic device may include one or N displays 194, where N is a positive integer greater than 1.

The camera 193 is configured to capture a static image or a video. In some embodiments, the camera 193 may include at least one camera, for example, one front-facing camera and one rear-facing camera.

The internal memory 121 may be configured to store computer-executable program code. The executable program code includes instructions. The processor 110 runs the instructions stored in the internal memory 121, to implement various functional applications of the electronic device and data processing. The internal memory 121 may include a program storage region and a data storage region. The program storage region may store an operating system, software code of at least one application (for example, iQIYI or WeChat), and the like. The data storage region may store data (for example, an image and a video) and the like created in a use process of the electronic device. In addition, the internal memory 121 may include a high-speed random access memory, and may further include a non-volatile memory, for example, at least one magnetic disk storage component, a flash component, or a universal flash storage (universal flash storage, UFS).

The external memory interface 120 may be configured to connect to an external storage card, for example, a micro SD card, to extend a storage capability of the electronic device. The external storage card communicates with the processor 110 through the external memory interface 120, to implement a data storage function. For example, files such as a picture and a video are stored in the external memory card.

The electronic device may implement audio functions, for example, music playing and recording, by using the audio module 170, the speaker 170A, the receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and may convert the pressure signal into an electrical signal. In some embodiments, the pressure sensor 180A may be disposed on the display 194. The gyro sensor 180B may be configured to determine a motion posture of the electronic device. In some embodiments, angular velocities of the electronic device around three axes (namely, axes x, y, and z) may be determined by using the gyro sensor 180B.

The gyro sensor 180B may be configured to perform image stabilization during shooting. The barometric pressure sensor 180C is configured to measure barometric pressure. In some embodiments, the electronic device calculates an altitude by using the barometric pressure measured by the barometric pressure sensor 180C, to assist in positioning and navigation. The magnetic sensor 180D includes a Hall effect sensor. The electronic device may detect opening and closing of a flip cover based on the magnetic sensor 180D. In some embodiments, when the electronic device is a flip phone, the electronic device may detect opening and closing of a flip cover based on the magnetic sensor 180D. Further, a feature, for example, automatic unlocking upon opening of the flip cover is set based on a detected opening or closing state of the flip cover. The acceleration sensor 180E may detect magnitude of accelerations of the electronic device in various directions (generally on three axes), and may detect magnitude and a direction of gravity when the electronic device is stationary. The acceleration sensor 180E may further be configured to identify a posture of the electronic device, and is used in an application, for example, switching between a landscape mode and a portrait mode or a pedometer.

The distance sensor 180F is configured to measure a distance. The electronic device may measure a distance through infrared or laser. In some embodiments, in a shooting scenario, the electronic device may measure a distance by using the distance sensor 180F, to implement quick focusing. The optical proximity sensor 180G may include, for example, a light-emitting diode (LED) and an optical detector, for example a photodiode. The light-emitting diode may be an infrared light emitting diode. The electronic device emits infrared light by using the light-emitting diode. The electronic device detects infrared reflected light from a nearby object by using the photodiode. When sufficient reflected light is detected, it may be determined that there is an object near the electronic device. When detecting insufficient reflected light, the electronic device may determine that there is no object near the electronic device. The electronic device may detect, by using the optical proximity sensor 180G, that a user holds the electronic device close to an ear for a call, to automatically turn off a screen for power saving. The optical proximity sensor 180G may also be used in smart cover mode or pocket mode to automatically unlock or lock the screen.

The ambient light sensor 180L is configured to sense ambient light luminance. The electronic device may adaptively adjust luminance of the display 194 based on the sensed luminance of the ambient light luminance. The ambient light sensor 180L may also be configured to automatically adjust a white balance during photographing. The ambient light sensor 180L may further cooperate with the optical proximity sensor 180G to detect whether the electronic device is in a pocket, to avoid an unintentional touch. The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy by using the temperature detected by the temperature sensor 180J. For example, when the temperature reported by the temperature sensor 180J exceeds a threshold, the electronic device reduces performance of a processor near the temperature sensor 180J, to reduce power consumption and implement heat protection. In some other embodiments, when the temperature is lower than another threshold, the electronic device heats the battery 142, to avoid an abnormal shutdown of the electronic device caused by a low temperature. In some other embodiments, when the temperature is lower than still another threshold, the electronic device boosts an output voltage of the battery 142, to avoid an abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event. The display 194 may provide a visual output related to the touch operation. In some other embodiments, the touch sensor 180K may be alternatively disposed on a surface of the electronic device, and is located at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal.

The button 190 includes a power button, a volume button, and the like. The button 190 may be a mechanical button, or a touch button. The electronic device may receive a button input, and generate a button signal input related to user setting and function control of the electronic device. The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device.

It may be understood that the components shown in FIG. 2 constitute no specific limitation on the mobile phone. The mobile phone may further include more or fewer components than those shown in the figure, or some components may be combined, or some components may be split, or there may be a different component arrangement. In the following embodiments, the electronic device shown in FIG. 1 is used as an example for description.

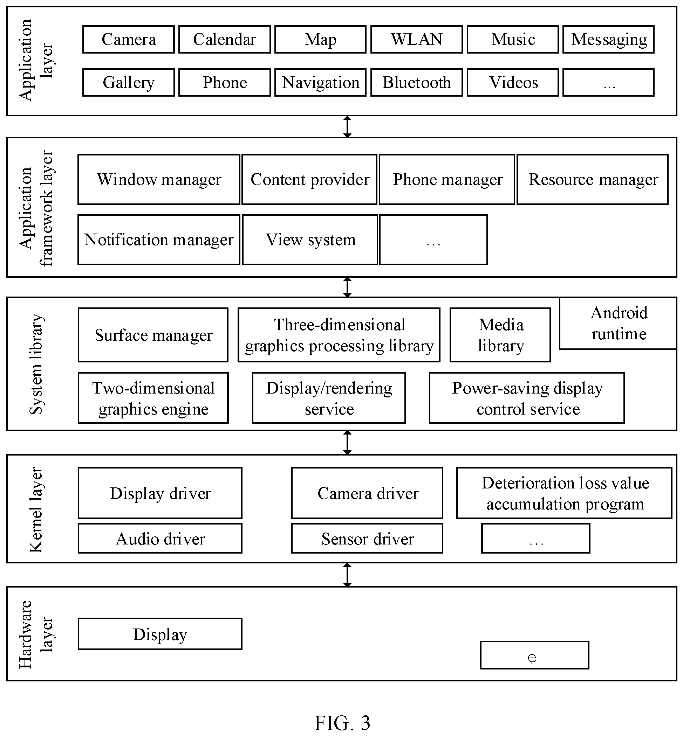

FIG. 3 is a block diagram of a software structure of the electronic device according to an embodiment of this application. As shown in FIG. 3, the software structure of the electronic device may be a layered architecture. For example, software may be divided into several layers, and each layer has a clear role and task. The layers communicate with each other through a software interface. In some embodiments, an Android system is divided into four layers: an application layer, an application framework (framework, FWK) layer, an Android runtime (Android runtime) and system library, and a kernel layer from top to bottom.

The application layer may include a series of application packages. As shown in FIG. 3, the application layer may include Camera, Settings, a skin module, a user interface (user interface, UI), a third-party application, and the like. The third-party application may include WeChat, QQ, Gallery, Calendar, Phone, Map, Navigation, WLAN, Bluetooth, Music, Videos, Messaging, and the like.

The application framework layer provides an application programming interface (application programming interface, API) and a programming framework for an application at the application layer. The application framework layer may include some predefined functions. As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, audio, calls that are made and answered, a browsing history, a bookmark, a phone book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function of the electronic device 100, for example, management of a call status (including answering, declining, and the like).

The resource manager provides various resources for an application, such as a localized character string, an icon, a picture, a layout file, and a video file.

The notification manager enables an application to display notification information in a status bar, and may be configured to convey a notification message. The notification manager may automatically disappear after a short pause without user interaction. For example, the notification manager is configured to provide notifications of download completion, a message prompt, and the like. The notification manager may alternatively be a notification that appears in a top status bar of the system in a form of a graph or a scroll bar text, for example, a notification of an application running in the background or a notification that appears on a screen in a form of a dialog window. For example, text information is displayed in the status bar, an alert sound is played, the electronic device vibrates, or an indicator light blinks.

The Android runtime includes a kernel library and a virtual machine. The Android runtime is responsible for scheduling and management of the Android system.

The kernel library includes two parts: a function that needs to be invoked in Java language and a kernel library of Android. The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media library), a three-dimensional graphics processing library (for example, an OpenGL ES), and a 2D graphics engine (for example, an SGL).

The surface manager is configured to manage a display subsystem, and provide fusion of 2D and 3D layers for a plurality of applications.

The media library supports playback and recording in a plurality of frequently used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In addition, the system library may further include a display/rendering service and an energy-saving display control service. The display/rendering service is used to determine a display digital stream. The display digital stream includes display information of each pixel unit (which may be referred to as a pixel unit for short below) on the display, and the display information may include display luminance, display time, text information, image information, and the like. The energy-saving display control service is used to determine the optimal display region from the candidate display regions.

The kernel layer is a layer between hardware and the software. The kernel layer includes at least a display driver, a camera driver, an audio driver, and a sensor driver. The kernel layer may further include a deterioration dissipation value accumulation program, configured to calculate an accumulated deterioration dissipation value of each sub-block on the display.

A hardware layer may include various types of sensors, for example, the acceleration sensor, the gyro sensor, and the touch sensor in embodiments of this application.

The following describes examples of working procedures of the software and the hardware of the electronic device with reference to the display control method in embodiments of this application.

In an example, the display/rendering service in the system library sends the display digital stream to the display driver at the kernel layer, so that the display driver drives the display to display corresponding display information on different pixel units. The deterioration dissipation value accumulation program at the kernel layer listens to a display digital stream sent by the display/rendering service to a display region, and determines display luminance and display duration that correspond to each sub-block in the display digital stream. The deterioration dissipation value accumulation program calculates the accumulated dissipation value of each sub-block based on the display luminance and the display duration of each sub-block. The energy-saving display control service in the system library divides the display into the plurality of candidate display regions based on the preset resolution. Each candidate display region includes the plurality of sub-blocks. The energy-saving display control service reads the accumulated dissipation value of each sub-block determined by the deterioration dissipation value accumulation program, and then determines a sum of the accumulated dissipation values of all the sub-blocks included in each candidate display region, namely, an accumulated dissipation value of each candidate display region. The energy-saving display control service determines the optimal display region with the lowest accumulated dissipation value in the plurality of candidate display regions, and sends a display position of the optimal display region to the display driver, so that the display driver drives the optimal display region on the display to display the information.

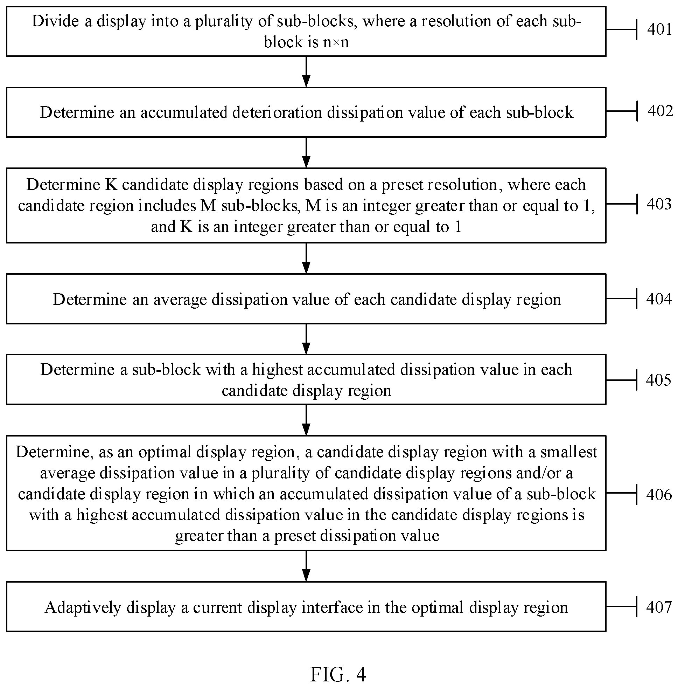

FIG. 4 is a schematic flowchart of the display control method according to an embodiment of this application. The method may be performed by the electronic device shown in FIG. 1 or FIG. 2. As shown in FIG. 4, a procedure of the method includes the following steps.

401: Divide a display into a plurality of sub-blocks, where a resolution of each sub-block is $n \times n$, $n$ is an integer greater than 1, and the resolution of each sub-block is less than a resolution of the display.

It should be noted that the resolution $n \times n$ of each sub-block may be set by default before delivery of the electronic device, or may be self-defined by a user. This is not limited in this embodiment of this application. It should be understood that, after setting the resolution $n \times n$ of each sub-block, the electronic device may divide the display into the plurality of sub-blocks based on the resolution of the display and $n \times n$. For example, the resolution $n \times n$ of each sub-block is $3 \times 3$. If the resolution of the display is $12 \times 12$, the display is divided into four sub-blocks, and the resolution of each sub-block is $3 \times 3$.

402: Determine an accumulated dissipation value of each sub-block.

The following embodiments describe two possible implementations of step 402.

Manner 1

The electronic device determines of a display duration $\Delta t$ of each sub-block and an average display luminance c of each sub-block within the display duration $\Delta t$. In this case, a dissipation value of an $i^{th}$ sub-block within the duration $\Delta t$ is obtained by using the following formula:

$$\Delta d_i = \frac{c_i \cdot \Delta t_i}{\alpha}.$$

$\Delta t_i$ is a display duration of the $i^{th}$ sub-block. $\Delta d_i$ is a dissipation value of the $i^{th}$ sub-block within the duration $\Delta t_i$, and $c_i$ is an average display luminance of the $i^{th}$ sub-block within the duration $\Delta t_i$. $\alpha$ is a product of a half-luminance life and an initial luminance of the display, and the initial luminance value is a luminance value when the display is lit up for the first time after delivery. The half-luminance life is duration required when the display attenuates from the initial luminance to half of the initial luminance. It may be understood that the initial luminance value and the half-luminance life may be pre-stored in the electronic device. Therefore, $\alpha$ may be pre-stored in the electronic device.

It should be noted that the foregoing process describes only calculation of the dissipation value of the $i^{th}$ sub-block within the duration $\Delta t_i$. In this case, an accumulated dissipation value of the $i^{th}$ sub-block since the $i^{th}$ sub-block is lit up for the first time is obtained by using the following formula:

$$d_i = d_{0i} + \Delta d_i.$$

$d_i$ is the accumulated dissipation value of the $i^{th}$ sub-block since the $i^{th}$ sub-block is lit up for the first time, and $d_{0i}$ is a historical accumulated dissipation value of the $i^{th}$ sub-block before $\Delta t_i$. In other words, the accumulated dissipation value of the $i^{th}$ sub-block is calculated phase by phase, and $d_{0i}$ is a sum of dissipation values within a plurality of time periods before $\Delta t_i$. A manner of calculating a dissipation value within each time period is the same as the foregoing calculation manner of $\Delta d_i$.

Therefore, the accumulated dissipation value of each sub-block is determined in the foregoing manner, and the accumulated dissipation value is a total dissipation value of each sub-block from a first-time lighting-up moment.

It should be noted that, in Manner 1, pixel units of different colors on each sub-block are not considered, and a processing manner is relatively simple.

Manner 2

It should be noted that, in Manner 2, pixel units (pixel units for short) of a plurality of basic colors on the display are considered, for example, pixel units of three basic colors: red (red), green (green), and blue (blue). In other words, each sub-block may include a red pixel unit, a green pixel unit, and a blue pixel unit. The electronic device may determine a dissipation value of each color pixel unit on each sub-block within display duration $\Delta t$.

For example, a dissipation value of a red pixel unit on an $i^{th}$ sub-block within $\Delta t_i$ duration may be obtained by using the following formula:

$$\Delta d_{r,i} = \frac{c_{r,i} \cdot \Delta t_{r,i}}{\alpha_r}.$$

$\Delta t_{r,i}$ is a display duration of the red pixel unit on the $i^{th}$ sub-block. $\Delta d_{r,i}$ is a dissipation value of the red pixel unit on the $i^{th}$ sub-block within the duration $\Delta t_{r,i}$, and $c_{r,i}$ is an average display luminance of the red pixel unit on the $i^{th}$ sub-block within the duration $\Delta t_{r,i}$. $\alpha_r$ is a product of a half-luminance life and an initial luminance of a red pixel unit on the display, and the initial luminance value may be a luminance value of the red pixel unit when the display is lit up for the first time after delivery. The half-luminance life is a working duration required when the red pixel unit on the display attenuates from the initial luminance to half of the initial luminance. It may be understood that the initial luminance value and the half-luminance life of the red pixel unit may be pre-stored in the electronic device, that is, $\alpha_r$ is pre-stored in the electronic device.

For another example, a dissipation value of a green pixel unit on the $i^{th}$ sub-block within the duration $\Delta t_i$ may be obtained by using the following formula:

$$\Delta d_{g,i} = \frac{c_{g,i} \cdot \Delta t_{g,i}}{\alpha_g}.$$

$\Delta t_{g,i}$ is a display duration of the green pixel unit on the $i^{th}$ sub-block. $\Delta d_{g,i}$ is a dissipation value of the green pixel unit on the $i^{th}$ sub-block within the duration $\Delta t_{g,i}$, and $c_{g,i}$ is an average display luminance of the green pixel unit on the $i^{th}$ sub-block within the duration $\Delta t_{g,i}$. $\alpha_g$ is a product of a half-luminance life and an initial luminance of a green pixel unit on the display, and the initial luminance value may be a luminance value of the green pixel unit when the display is lit up for the first time after delivery. The half-luminance life is a working duration required when the green pixel unit on the display attenuates from the initial luminance to half of the initial luminance. It may be understood that the initial luminance value and the half-luminance life of the green pixel unit may be pre-stored in the electronic device, that is, $\alpha_g$ is pre-stored in the electronic device.

For another example, a dissipation value of a blue pixel unit on the $i^{th}$ sub-block within the duration $\Delta t_i$ may be obtained by using the following formula:

$$\Delta d_{b,i} = \frac{c_{b,i} \cdot \Delta t_{b,i}}{\alpha_b}.$$

$\Delta t_{b,i}$ is a display duration of the blue pixel unit on the $i^{th}$ sub-block. $\Delta d_{b,i}$ is a dissipation value of the blue pixel unit on the $i^{th}$ sub-block within the duration $\Delta t_{b,i}$, and $c_{b,i}$ is an average display luminance of the blue pixel unit on the $i^{th}$ sub-block within the duration $\Delta t_{b,i}$. $\alpha_b$ is a product of a half-luminance life and an initial luminance of a blue pixel unit on the display, and the initial luminance value may be a luminance value of the blue pixel unit when the display is lit up for the first time after delivery. The half-luminance life is a working duration required when the blue pixel unit on the display attenuates from the initial luminance to half of the initial luminance. It may be understood that the initial luminance value and the half-luminance life of the blue pixel unit may be pre-stored in the electronic device, that is, $\alpha_b$ is pre-stored in the electronic device.

It may be understood that a dissipation value of the $i^{th}$ sub-block within the duration $\Delta t_i$ is a sum of the dissipation value of the blue pixel unit within the duration $\Delta t_i$, the dissipation value of the green pixel unit within the duration $\Delta t_i$, and the dissipation value of the red pixel unit within the duration $\Delta t_i$ on the $i^{th}$ sub-block, that is, the dissipation value of the $i^{th}$ sub-block within the duration $\Delta t_i$ is obtained by using the following formula:

$$\Delta d_i = \Delta d_{r,i} + \Delta d_{g,i} + \Delta d_{b,i} = \frac{c_{r,i} \cdot \Delta t_{r,i}}{\alpha_r} + \frac{c_{g,i} \cdot \Delta t_{g,i}}{\alpha_g} + \frac{c_{b,i} \cdot \Delta t_{b,i}}{\alpha_b}.$$

It should be noted that the foregoing process describes only calculation of the dissipation value of the $i^{th}$ sub-block within the duration $\Delta t_i$. In this case, an accumulated dissipation value of the $i^{th}$ sub-block since the $i^{th}$ sub-block is lit up for the first time may be obtained by using the following formula:

$$d_i = d_{0i} + \Delta d_i.$$

$d_i$ is the accumulated dissipation value of the $i^{th}$ sub-block after the $i^{th}$ sub-block is lit up for the first time, and $d_{0i}$ is a historical accumulated dissipation value of the $i^{th}$ sub-block before $\Delta t_i$. Therefore, the accumulated dissipation value of the $i^{th}$ sub-block is calculated phase by phase, and $d_{0i}$ is a sum of dissipation values within a plurality of time periods. A manner of calculating a dissipation value within each time period is the same as the foregoing calculation manner of $\Delta d_i$.

Therefore, the accumulated dissipation value of each sub-block may be determined in the foregoing manner.

It should be noted that, different from that in Manner 1, in Manner 2, different color pixel units on each sub-block are considered, to calculate the accumulated dissipation value of each sub-block more accurately.

403: Determine K candidate display regions based on a preset resolution, where each candidate region includes M sub-blocks, M is an integer greater than or equal to 1, and K is an integer greater than 1. The K candidate display regions occupy the entire display.

It should be noted that the preset resolution may be set by default before the delivery of the electronic device, or may be self-defined by the user.

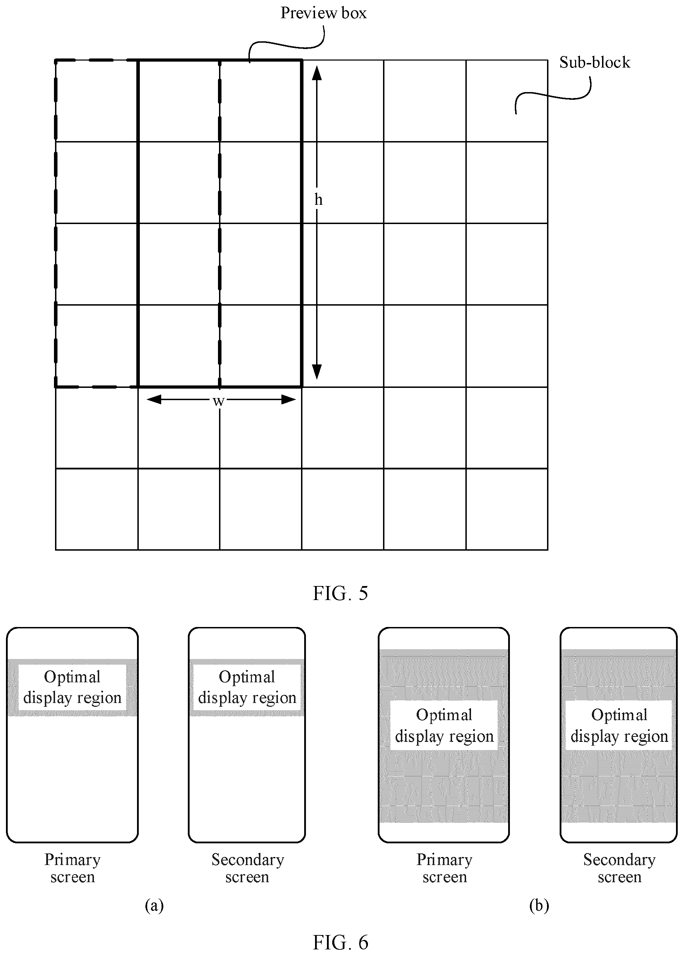

For example, the resolution of the display is 1280×1024, and the preset resolution is w×h, where w is greater than or equal to n and less than or equal to 1280, and h is greater than or equal to n and less than or equal to 1024. The electronic device divides the display into a plurality of candidate display regions, and a resolution of each candidate display region is w×h. In a possible implementation, as shown in FIG. 5, the display of the electronic device is divided into a plurality of sub-blocks. The electronic device sequentially determines the candidate display devices from left to right (or from top to bottom) based on a w×h preview box (resolution). A moving step of the preview box from left to right may be set by default, for example, may be a length of one sub-block. Therefore, the electronic device may determine the plurality of candidate display regions, and each candidate display region includes the M sub-blocks.

404: Determine an average accumulated dissipation value of each candidate display region.

In step 402, the accumulated dissipation value of each sub-block is determined. Therefore, an average accumulated dissipation value of a $j^{th}$ candidate region may be determined by using the following formula:

$$D_j = \frac{1}{M_0 - N_0 + 1} \sum_{i=N_0}^{M_0} d_i \, ,$$

where i = N0, ..., and M0.

$D_j$ is the average accumulated dissipation value of the $j^{th}$ candidate display region, and $d_i$ is an accumulated dissipation value of an $i^{th}$ sub-block included in the $j^{th}$ candidate display region. Therefore, an average value of a sum of accumulated dissipation values of all sub-blocks in the $j^{th}$ candidate display region is the average accumulated dissipation value of the $j^{th}$ candidate display region.

405: Determine a sub-block with a highest accumulated dissipation value in each candidate display region.

To be specific, $d_{j,max} = max(d_i)$, where i is greater than or equal to 1 and less than or equal to M, $d_{j,max}$ is an accumulated dissipation value of a sub-block with a highest dissipation value in the M sub-blocks included in the $j^{th}$ candidate display region, and $d_i$ is the accumulated dissipation value of the $i^{th}$ sub-block included in the $j^{th}$ candidate display region. It is assumed that the $j^{th}$ candidate display region includes three sub-blocks. In this case, a sub-block with a highest accumulated dissipation value in the three sub-blocks is determined.

406: Determine, as an optimal display region, a candidate display region with a smallest average accumulated dissipation value in the plurality of candidate display regions and/or, while not forming part of the claimed invention, a candidate display region in which an accumulated dissipation value of a sub-block with a highest accumulated dissipation value in the candidate display regions is less than a preset threshold.

In a possible manner, because the average accumulated dissipation value of each candidate display region is determined in step 404, the electronic device determines the candidate display region with the smallest average accumulated dissipation value in the plurality of candidate display regions as the optimal display region.

In another possible manner, because the sub-block with the highest accumulated dissipation value in each candidate display region is determined in step 405, the electronic device selects the optimal display region from the plurality of candidate display regions. The accumulated dissipation value of the sub-block with the highest accumulated dissipation value in the optimal display region is less than an accumulated dissipation value of a sub-block with a highest accumulated dissipation value in another candidate display region.

In another possible implementation not forming part of the claimed invention, the average accumulated dissipation value of each candidate display region and the sub-block with the highest accumulated dissipation value in each candidate display region are comprehensively considered. For example, the electronic device may determine the optimal display region by using the following formula:

$$min\{\beta * D_j + (1 - \beta)d_{j,max}\},$$

where j=1, ..., and K.

$D_j$ is the average accumulated dissipation value of the j$^{th}$ candidate display region. $d_{j,max}$ is the accumulated dissipation value of the sub-block with the highest accumulated dissipation value in the j$^{th}$ candidate display region, and $\beta$ is a weighting coefficient, and is a value pre-stored in the electronic device.

It should be noted that, in the display control method provided in this embodiment of this application, on one hand, an average deterioration dissipation value of the selected optimal display region is relatively small, to balance dissipation of different regions on the entire display. On another hand, it is avoided that dissipation of an individual sub-block in the selected display region has reached a maximum and the sub-block is to fail to work, to prevent a screen from having a defect pixel.

407: Adaptively display a current display interface in the optimal display region.

The adaptively displaying includes: : scaling down the current display interface to the optimal display region for display, or displaying a part of the current display interface in the optimal display region and skipping displaying the remaining part of the current display interface, where the part of the current display interface may be specified by the user, or adaptively determined by an app on the current display interface.

Not forming part of the claimed invention, the adaptively displaying may also include: selecting a control of an appropriate size on the current display interface for display based on a size of the optimal display region, to adapt to the size of the optimal display region, where the control includes elements such as a button, a text, an icon, and a picture, or a combination of the elements; or adjusting a layout on the current display interface to adapt to a size of the optimal display region, where the layout may be a layout of a button, a text, an icon, a picture, and the like on the current display interface. For example, when the current display interface includes an application window of a first application, the first application may adjust a layout in the application window to adapt to the optimal display region, or the first application may adaptively adjust a resolution/size of the application window to adapt to the size of the optimal display region.

Example 1

Refer to (a) in FIG. 6. When the electronic device is in a folded form, a primary screen or a secondary screen displays information. The electronic device determines an optimal display region on the primary screen or the secondary screen. For example, gray display regions in the figure are the optimal display regions. For example, the primary screen or the secondary screen displays a lock screen. The electronic device may display fixed information in the optimal display region, and the fixed information may be information such as a battery level, time, and weather. The electronic device may display dynamic information in another region (another region other than the gray region), where the dynamic information may be a newly received message, incoming call information, or the like; or turn off another region.

It should be noted that the lock screen generally includes the fixed information such as the time and the battery level, and the fixed information is displayed in a fixed region on the lock screen. If the fixed region displays the information for a long time, the fixed region has quick dissipation. Consequently, the fixed region has severe dissipation, and then the entire display has unbalanced dissipation. According to the technical solution provided in this embodiment of this application, the electronic device may display the fixed information in the optimal display region obtained through calculation. Because the optimal display region is a display region, selected from the plurality of candidate display regions, with a smallest accumulated dissipation, a case in which the dissipation of the different regions on the display is unbalanced can be avoided.

In addition, because the average accumulated dissipation value of each candidate display region is considered when the electronic device determines the optimal display region, and the accumulated dissipation value of each sub-block in each candidate display region varies with time, the average accumulated dissipation values of each candidate display region are different at different time. Therefore, the optimal display regions determined by the electronic device may be different at different times. For example, the electronic device displays the fixed information in an upper half display region (where the upper half display region is the optimal display region) in a period of time, and may display the fixed information in a lower half display region (where the lower half display region is the optimal display region) in another period of time.

Example 2

Refer to (b) in FIG. 6. The electronic device is in a folded form. A primary screen or a secondary screen displays a

18

first interface, and the first interface is, for example, a home screen or a display interface of an application. The electronic device determines an optimal display region on the primary screen or the secondary screen. For example, gray display regions in the figure are the optimal display regions obtained through calculation. The electronic device may scale down the first interface on the primary screen or the secondary screen, and then display the scaled-down first interface in the optimal display region. Because a display area of the optimal display region obtained through calculation is less than a display area of the entire display, when the scaled-down first interface is displayed in the optimal display region, no information may be displayed in another region other than the optimal display region. For example, the another region is turned off.

Example 3

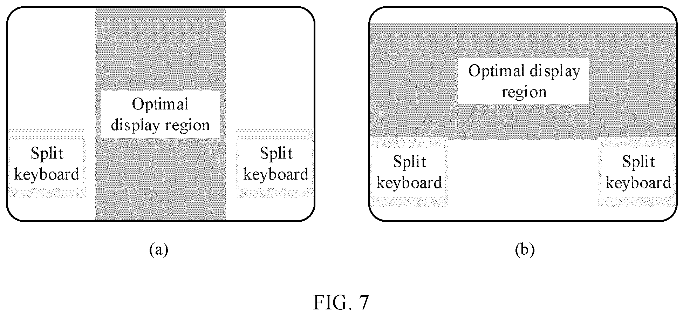

Refer to (a) in FIG. 7. The electronic device is in an unfolded form. It is assumed that the electronic device currently displays a first interface, and the first interface includes the application window of the first application. The electronic device determines, based on a type of the first application, whether the first application is suitable for portrait-orientation display or landscape-orientation display. If the first application is suitable for portrait-orientation display, for example, the first application is a WeChat application, the electronic device selects a candidate display region by using the w×h preview box, where w is less than h. Therefore, a selected optimal display region is in a portrait orientation. For example, a gray display region in the figure is the optimal display region obtained through calculation. In this case, a scaled-down first interface is displayed in the optimal display region, and no information is displayed in another display region other than the optimal display region. For example, the another region is turned off. Alternatively, a scaled-down first interface is displayed in the optimal display region, and a keyboard touch region is displayed in another display region other than the optimal display region.

Alternatively, the electronic device may determine the size/a resolution of the optimal display region based on display content included on the current display interface. The display content may include a picture, a video, a text, and the like on the current display interface. For example, if the current display interface is a video playing interface, it is determined that the optimal display region is displayed in the landscape orientation.

In this example, the electronic device may determine a relationship between w and h based on a type of an application included on the current display interface and/or the display content, and then determine the optimal display region in the landscape orientation or the optimal display region in the portrait orientation. In other words, the electronic device determines an appropriate size/resolution based on the application and/or the display content on the current display interface, and then searches for the optimal display region based on the size/resolution. A process of determining the optimal display region is described above. Details are not described herein again.

Example 4

Refer to (b) in FIG. 7. The electronic device is in an unfolded form. It is assumed that the electronic device currently displays a first interface, and the first interface includes the application window of the first application. The electronic device determines, based on a type of the first application, whether the first application is suitable for portrait-orientation display or landscape-orientation display. If the first application is suitable for landscape-orientation display, for example, the first application is Tencent Video, the electronic device selects a candidate display region by using the w×h preview box, where w is greater than h. In this case, a selected optimal display region is in a landscape orientation. For example, a gray display region in the figure is the optimal display region obtained through calculation. In this case, a scaled-down first interface is displayed in the optimal display region, and no information is displayed in another display region other than the optimal display region. For example, the another region is turned off. Alternatively, a scaled-down first interface is displayed in the optimal display region, and a keyboard touch region is displayed in another display region other than the optimal display region.

It should be noted that the display control method provided in this embodiment of this application may be used when an "energy-saving display" function of the electronic device is activated. For example, the electronic device provides an activation control for the "energy-saving display" function in a setting application. When the control is activated, the electronic device enables the "energy-saving display" function, to perform the display control method provided in this embodiment of this application. For another example, when meeting a preset condition, the electronic device may alternatively automatically enable the "energy-saving display" function. The preset condition may be that a current remaining battery level of the electronic device is less than a preset battery level, current total power consumption of the electronic device is greater than preset power consumption, or the like.

(b) in FIG. 7 is used as an example. The electronic device is in the unfolded form, and displays the first interface in full screen. When detecting that the current remaining battery level is less than the preset battery level, the electronic device automatically determines the optimal display region, and displays the scaled-down first interface in the optimal display region. In other words, when the electronic device performs full-screen display and detects that the remaining battery level is relatively low, the electronic device may automatically scale down a display region. In other words, the scaled-down display region is the optimal display region determined by using the foregoing process. In this way, electric energy is saved, a battery endurance capability is improved, and the dissipation of the different regions on the display is balanced.

It should be noted that, in embodiments of this application, division into units is an example and is merely logical function division. During actual implementation, there may be another division manner. Functional units in embodiments of the present invention may be integrated into one processing unit, or each of the units may exist alone physically, or two or more units are integrated into one unit. For example, in the foregoing embodiments, a first obtaining unit and a second obtaining unit may be a same unit or different units. The integrated unit may be implemented in a form of hardware, or may be implemented in a form of a software functional unit.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like.

**Claims**

1. A display control method performed by an electronic device comprising a display, the display being an active-matrix organic light-emitting diode or an organic light-emitting diode, the method comprising the steps of:

   • dividing (step 401) the display into a plurality of sub-blocks, wherein a resolution of each sub-block is a first preset resolution, and the first preset resolution is less than a second resolution of the display;
   • dividing (step 403) the display into K candidate display regions based on a second preset resolution, wherein each candidate display region comprises M sub-blocks of the plurality of sub-blocks, M is an integer greater than or equal to 1, and K is an integer greater than 1;
   • determining an optimal display region with a lowest accumulated dissipation value in the K candidate display regions, wherein the accumulated dissipation value is a dissipation value of each candidate display region accumulated from a first-time lighting-up moment, wherein the determining the optimal display region with the lowest accumulated dissipation value in the K candidate display regions comprises:

     ◦ determining (step 402) an accumulated dissipation value of each sub-block in each candidate display region in the K candidate display regions,
     wherein the determining the accumulated dissipation value of each sub-block in each candidate display region in the K candidate display regions comprises:

       ▪ determining an accumulated dissipation value of an i^th sub-block in each candidate display region by using the following formulas:

$$\Delta d_i = \frac{c_i \cdot \Delta t_i}{\alpha};$$

*and*

$$d_i = d_{0i} + \Delta d_i,$$

*wherein*

$\Delta t_i$ is a display duration of the ith sub-block; $\Delta d_i$ is a dissipation value of the ith sub-block within the duration $\Delta t_i$, and $c_i$ is an average display luminance of the ith sub-block within the duration $\Delta t_i$; $\alpha$ is a product of a half-luminance life and initial luminance of the display, and the initial luminance value may be a luminance value when the display is lit up for the first time after delivery; the half-luminance life is a working duration required when the display attenuates from the initial luminance to half of the initial luminance; $d_{0i}$ is an accumulated dissipation value of the ith sub-block before $\Delta t_i$; and $d_i$ is an accumulated dissipation value after the ith sub-block is lit up for the first time, and i is an integer greater than or equal to and less than or equal to M;

  ◦ determining a sum of the accumulated dissipation values of all the sub-blocks in each candidate display region as an accumulated dissipation value of a jth candidate display region, wherein j is an integer greater than or equal to 1 and less than or equal to K; and
  ◦ determining as the optimal display region the display region with the lowest accumulated dissipation values in the K candidate display regions, and

• adaptively (step 407) displaying a first interface in the optimal display region, wherein the adaptively displaying the first interface in the optimal display region comprises:

  ◦ scaling down the first interface and displaying the scaled-down first interface in the optimal display region; or
  ◦ displaying a part of the content of the first interface in the optimal display region, and skipping displaying a remaining part of the content of the first interface.

2. The method according to claim 1, wherein the first interface comprises an application window of a first application, and before the dividing the display into K candidate display regions, the method further comprises:

  ◦ determining a resolution or size of the candidate display region based on an application type of the first application and/or display content of the first interface.

3. An electronic device comprising a display, the display being an active-matrix organic light-emitting diode or an organic light-emitting diode, wherein the electronic device is configured to perform any of the methods according to claims 1 - 2.

4. A computer-readable storage medium comprising instructions, wherein, when the instructions are run on the electronic device of claim 3, the electronic device is caused to perform any of the methods according to claims 1 - 2.

**Patentansprüche**

1. Anzeigesteuerungsverfahren, das durch eine elektronische Vorrichtung durchgeführt wird, die eine Anzeige umfasst, wobei die Anzeige eine organische Leuchtdiode mit aktiver Matrix oder eine organische Leuchtdiode ist, wobei das Verfahren die Schritte umfasst:

  • Aufteilen (Schritt 401) der Anzeige in eine Vielzahl von Unterblöcken, wobei eine Auflösung jedes Unterblocks eine erste voreingestellte Auflösung ist und die erste voreingestellte Auflösung geringer als eine zweite Auflösung der Anzeige ist;
  • Aufteilen (Schritt 403) der Anzeige in K Kandidatenanzeigebereiche basierend auf einer zweiten voreingestellten Auflösung, wobei jeder Kandidatenanzeigebereich M Unterblöcke der Vielzahl von Unterblöcken umfasst, M eine Ganzzahl größer als oder gleich 1 ist und K eine Ganzzahl größer als 1 ist;
  • Bestimmen eines optimalen Anzeigebereichs mit einem niedrigsten akkumulierten Dissipationswert in den K Kandidatenanzeigebereichen, wobei der akkumulierte Dissipationswert ein Dissipationswert jedes Kandidatenanzeigebereichs ist, der von einem ersten Aufleuchtmoment akkumuliert wird, wobei das Bestimmen des optimalen Anzeigebereichs mit dem niedrigsten akkumulierten Dissipationswert in den K Kandidatenanzeigebereichen umfasst:

○ Bestimmen (Schritt 402) eines akkumulierten Dissipationswerts jedes Unterblocks in jedem Kandidatenanzeigebereich in den K Kandidatenanzeigebereichen,
wobei das Bestimmen des akkumulierten Dissipationswerts jedes Unterblocks in jedem Kandidatenanzeigebereich in den K Kandidatenanzeigebereichen umfasst:

■ Bestimmen des akkumulierten Dissipationswertes eines i-ten Unterblocks in jedem Kandidatenanzeigebereich durch Verwenden der folgenden Formeln:

$$\Delta d_i = \frac{c_i \cdot \Delta t_i}{\alpha};$$

und

$$d_i = d_{0i} + \Delta d_i,$$

wobei $\Delta t_i$ eine Anzeigedauer des i-ten Unterblocks ist; $\Delta d_i$ ein Dissipationswert des i-ten Unterblocks innerhalb der Dauer $\Delta t_i$ ist und $c_i$ eine durchschnittliche Anzeigeleuchtdichte des i-ten Unterblocks innerhalb der Dauer $\Delta t_i$ ist; $\alpha$ ein Produkt einer halben Leuchtdichtelebensdauer und einer Anfangsleuchtdichte der Anzeige ist, und der Anfangsleuchtdichtewert ein Leuchtdichtewert sein kann, wenn die Anzeige zum ersten Mal nach einer Lieferung aufleuchtet; die halbe Leuchtdichtelebensdauer eine Betriebsdauer ist, die erforderlich ist, wenn die Anzeige von der Anfangsleuchtdichte auf die Hälfte der Anfangsleuchtdichte abfällt; $d_{0i}$ ein akkumulierter Dissipationswert des i-ten Unterblocks vor $\Delta t_i$ ist; und $d_i$ ein akkumulierter Dissipationswert ist, nachdem der i-te Unterblock zum ersten Mal aufleuchtet und i eine Ganzzahl ist, die größer als oder gleich und geringer als oder gleich M ist;

o Bestimmen einer Summe der akkumulierten Dissipationswerte aller Unterblöcke in jedem Kandidatenanzeigebereich als ein akkumulierter Dissipationswert von einem j-ten Kandidatenanzeigebereich, wobei j eine Ganzzahl größer als oder gleich 1 und geringer als oder gleich K ist; und
o Bestimmen, als den optimalen Anzeigebereich, des Anzeigebereichs mit den niedrigsten akkumulierten Dissipationswerten in den K Kandidatenanzeigebereichen, und

• adaptives (Schritt 407) Anzeigen einer ersten Schnittstelle in dem optimalen Anzeigebereich, wobei das adaptive Anzeigen der ersten Schnittstelle in dem optimalen Anzeigebereich umfasst:

○ Verkleinern der ersten Schnittstelle und Anzeigen der verkleinerten ersten Schnittstelle in dem optimalen Anzeigebereich; oder
○ Anzeigen eines Teils des Inhalts der ersten Schnittstelle in dem optimalen Anzeigebereich und Überspringen des Anzeigens eines verbleibenden Teils des Inhalts der ersten Schnittstelle.

2. Verfahren nach Anspruch 1, wobei die erste Schnittstelle ein Anwendungsfenster einer ersten Anwendung umfasst, und vor dem Aufteilen der Anzeige in K Kandidatenanzeigebereiche das Verfahren ferner umfasst:

○ Bestimmen einer Auflösung oder einer Größe des Kandidatenanzeigebereichs basierend auf einem Anwendungstyp der ersten Anwendung und/oder einem Anzeigeinhalt der ersten Schnittstelle.

3. Elektronische Vorrichtung, die eine Anzeige umfasst, wobei die Anzeige eine organische Leuchtdiode mit aktiver Matrix oder eine organische Leuchtdiode ist, wobei die elektronische Vorrichtung konfiguriert ist, um ein beliebiges der Verfahren nach den Ansprüchen 1 bis 2 durchzuführen.

4. Computerlesbares Speichermedium, das Anweisungen umfasst, wobei, wenn die Anweisungen auf der elektronischen Vorrichtung nach Anspruch 3 ablaufen, die elektronische Vorrichtung veranlasst wird, ein beliebiges der Verfahren nach den Ansprüchen 1 bis 2 durchzuführen.

**Revendications**

1. Procédé de commande d'affichage effectué par un dispositif électronique comprenant un affichage, l'affichage étant une diode électroluminescente organique à matrice active ou une diode électroluminescente organique-, le procédé comprenant les étapes consistant à ;

   • diviser (étape 401) l'affichage en une pluralité de sous-blocs, dans lequel une résolution de chaque sous-bloc est une première résolution prédéfinie, et la première résolution prédéfinie est inférieure à une seconde résolution de l'affichage :
   • diviser (étape 403) l'affichage en K régions d'affichage candidates sur la base d'une seconde résolution prédéfinie, dans lequel chaque région d'affichage candidate comprend M sous-blocs de la pluralité de sous-blocs, M est un nombre entier supérieur ou égal à 1, et K est un nombre entier supérieur à 1 :
   • déterminer une région d'affichage optimale avec une valeur de dissipation cumulée la plus faible dans les K régions d'affichage candidates, dans lequel la valeur de dissipation cumulée est une valeur de dissipation de chaque région d'affichage candidate cumulée à partir d'un premier moment d'allumage, dans lequel la détermination de la région d'affichage optimale avec la valeur de dissipation cumulée la plus faible dans les K régions d'affichage candidates comprend :

   ◦ la détermination (étape 402) d'une valeur de dissipation cumulée de chaque sous-bloc dans chaque région d'affichage candidate dans les K régions d'affichage candidates, dans lequel la détermination de la valeur de dissipation cumulée de chaque sous-bloc dans chaque région d'affichage candidate dans les K régions d'affichage candidates comprend :

   ▪ la détermination d'une valeur de dissipation cumulée d'un $i^{ième}$ sous-bloc dans chaque zone d'affichage candidate en utilisant les formules suivantes :

   $$\Delta d_i = \frac{c_i \cdot \Delta t_i}{\alpha};$$

   *et*

   $$d_i = d_{0i} + \Delta d_i,$$

   *dans lequel* $\Delta t_i$ est une durée d'affichage du $i^{ième}$ sous-bloc ; $\Delta d_i$ est une valeur de dissipation du $i^{ième}$ sous-bloc pendant la durée $\Delta t_i$, et $c_i$ est une luminance d'affichage moyenne du $i^{ième}$ sous-bloc pendant la durée $\Delta t_i$ ; $\alpha$ est un produit d'une durée de vie à demi-luminance et d'une luminance initiale de l'affichage, et la valeur de luminance initiale peut être une valeur de luminance lorsque l'affichage est allumé pour la première fois après livraison ; la durée de vie à mi-luminance est une durée de fonctionnement requise lorsque l'affichage passe de la luminance initiale à la moitié de la luminance initiale ; $d_{0i}$ est une valeur de dissipation cumulée du $i^{ième}$ sous-bloc avant $\Delta t_i$ ; et $d_i$ est une valeur de dissipation cumulée après que le $i^{ième}$ sous-bloc a été allumé pour la première fois, et i est un nombre entier supérieur ou égal à et inférieur ou égal à M ;

   ◦ la détermination d'une somme des valeurs de dissipation cumulées de tous les sous-blocs dans chaque région d'affichage candidate en tant que valeur de dissipation cumulée d'une $j^{ième}$ région d'affichage candidate, dans lequel j est un nombre entier supérieur ou égal à 1 et inférieur ou égal à K ; et
   ◦ la détermination en tant que région d'affichage optimale de la région d'affichage présentant les valeurs de dissipation cumulées les plus faibles parmi les K régions d'affichage candidates, et

   • afficher de manière adaptative (étape 407) une première interface dans la région d'affichage optimale, dans lequel l'affichage adaptatif de la première interface dans la région d'affichage optimale comprend :

   ◦ la réduction d'échelle de la première interface et l'affichage de la première interface réduite dans la région d'affichage optimale ; ou
   ◦ l'affichage d'une partie du contenu de la première interface dans la région d'affichage optimale, et l'évitement de l'affichage d'une partie restante du contenu de la première interface.

2. Procédé selon la revendication 1, dans lequel la première interface comprend une fenêtre d'application d'une première application, et avant la division de l'affichage en K régions d'affichage candidates, le procédé comprend en outre :

  ◦ la détermination d'une résolution ou d'une taille de la région d'affichage candidate sur la base d'un type d'application de la première application et/ou du contenu d'affichage de la première interface.

3. Dispositif électronique comprenant un affichage, l'affichage étant une diode électroluminescente organique à matrice active ou une diode électroluminescente organique, dans lequel le dispositif électronique est configuré pour effectuer un quelconque des procédés selon les revendications 1 à 2.

4. Support de stockage lisible par ordinateur, comprenant des instructions, dans lequel, lorsque les instructions sont exécutées sur un dispositif électronique selon la revendication 3, le dispositif électronique est en mesure d'effectuer un quelconque des procédés selon les revendications 1 à 2.

FIG. 1

Mobile phone 100

Antenna 1    Antenna 2

150    160

| Mobile communication module 2G/3G/4G/5G | Wireless communication module BT/WLAN/GNSS/ NFC/IR/FM |

180

170

170A — Speaker

170B — Receiver

170C — Microphone

170D — Headset jack

Audio module

194 — Displays 1 to N

193 — Cameras 1 to N

192 — Indicator

191 — Motor

190 — Button

121 — Internal memory

195 — SIM card interfaces 1 to N

120 — External memory interface

110

Processor

Sensor module

Pressure sensor — 180A

Gyro sensor — 180B

Barometric pressure sensor — 180C

Magnetic sensor — 180D

Acceleration sensor — 180E

Distance sensor — 180F

Optical proximity sensor — 180G

Fingerprint sensor — 180H

Temperature sensor — 180J

Touch sensor — 180K

Ambient light sensor — 180L

Bone conduction sensor — 180M

140

130 — USB interface

Charging input

Charging management module

Power management module — 141

Battery — 142

FIG. 2

| Application layer | | | | | | |
|---|---|---|---|---|---|---|
| | Camera | Calendar | Map | WLAN | Music | Messaging |
| | Gallery | Phone | Navigation | Bluetooth | Videos | ... |

| Application framework layer | | | | |
|---|---|---|---|---|
| | Window manager | Content provider | Phone manager | Resource manager |
| | Notification manager | View system | ... | |

| System library | | | | |
|---|---|---|---|---|
| | Surface manager | Three-dimensional graphics processing library | Media library | Android runtime |
| | Two-dimensional graphics engine | Display/rendering service | Power-saving display control service | |

| Kernel layer | | | |
|---|---|---|---|
| | Display driver | Camera driver | Deterioration loss value accumulation program |
| | Audio driver | Sensor driver | ... |

| Hardware layer | | |
|---|---|---|
| | Display | e |

FIG. 3

Divide a display into a plurality of sub-blocks, where a resolution of each sub-block is n×n — 401

Determine an accumulated deterioration dissipation value of each sub-block — 402

Determine K candidate display regions based on a preset resolution, where each candidate region includes M sub-blocks, M is an integer greater than or equal to 1, and K is an integer greater than or equal to 1 — 403

Determine an average dissipation value of each candidate display region — 404

Determine a sub-block with a highest accumulated dissipation value in each candidate display region — 405

Determine, as an optimal display region, a candidate display region with a smallest average dissipation value in a plurality of candidate display regions and/or a candidate display region in which an accumulated dissipation value of a sub-block with a highest accumulated dissipation value in the candidate display regions is greater than a preset dissipation value — 406

Adaptively display a current display interface in the optimal display region — 407

FIG. 4

FIG. 5

FIG. 6

(a)
(b)

FIG. 7

**EP 4 024 964 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109410814 A
- US 2016379550 A1